# EUROPÄISCHE PATENTSCHRIFT

(11) **EP 0 922 559 B1**
(45) Veröffentlichungstag und Bekanntmachung des Hinweises auf die Patenterteilung: **09.03.2005**
(21) Anmeldenummer: 98122931.3
(22) Anmeldetag: 03.12.1998
(51) Int. Cl.: B29C 65/00, B29C 44/12, B29C 44/34, B29C 44/56, B29C 65/14

(54) **Verfahren zum Verbinden von Bauteilen**
Process for joining components
Procédé pour lier des composants

(30) Priorität: 10.12.1997 DE 19754834
(43) Veröffentlichungstag der Anmeldung: 16.06.1999
(73) Patentinhaber: Volkswagen Aktiengesellschaft, 38436 Wolfsburg (DE)
(72) Erfinder: Jaworski, Jens, 38447 Jembke (DE)
(74) Vertreter: Schneider, Henry, Dipl.-Ing.

(56) Entgegenhaltungen:
- DE-A- 3 836 009
- GB-A- 1 262 167
- GB-A- 1 369 095
- GB-A- 2 166 080
- US-A- 3 650 868
- US-A- 3 902 940
- US-A- 4 960 478
- PATENT ABSTRACTS OF JAPAN vol. 009, no. 121 (M-382), 25. Mai 1985 & JP 60 008042 A (NIPPON STYREN PAPER KK;OTHERS: 01), 16. Januar 1985

## Beschreibung

Die vorliegende Erfindung betrifft ein Verfahren zum Verbinden von Bauteilen aus Partikelschaumstoffen untereinander oder mit anderen Bauteilen aus anderen Werkstoffen. Als Partikelschaumstoffe werden solche Schaumstoffe verstanden, die aus miteinander verschweißten Schaumstoffpartikeln herstellbar sind und keine Weichmacher und Treibmittel enthalten. Die Eigenschaften des Partikelschaumstoffs richten sich nach den Eigenschaften des Werkstoffs, vorzugsweise polymeren Kunststoffs, aus dem die Gerüstsubstanz besteht. Die Partikelschaumstoffe sind im Inneren geschlossenzellig, wobei der Feststoffanteil in den Zellwänden und dem Zellgerüst konzentriert ist und das Zellgas Luft ist.

Die Verarbeitung von Schaumstoffpartikeln zu Bauteilen aus solchen Partikelschaumstoffen erfolgt beispielsweise auf Formteilautomaten. Beispielsweise werden pneumatisch verdichtete Schaumstoffpartikel in ein meist geschlossenes perforiertes Formwerkzeug gebracht, das sich in einem druckfesten Raum befindet und dort beispielsweise unter Heißdampf zu dem Schaumstoffbauteil verschweißt.

Partikelschaumstoffe gemäß obiger Definition können z. B. solche sein, die als Feststoffanteil ein Polyolefin enthalten. Als bevorzugte Partikelschaumstoffe kommen im Rahmen der vorliegenden Erfindung unter anderem expandiertes Polypropylen, thermoplastische Polyolefinelastomere und Schaumstoffe mit ähnlichen Eigenschaften in Betracht. Besonders bevorzugt ist im Rahmen der Erfindung das expandierte Polypropylen (EPP).

Die aus dem Stand der Technik bekannten Verfahren zum Verbinden von Bauteilen aus Partikelschaumstoffen untereinander bzw. zum Verbinden solcher Bauteile mit anderen Bauteilen aus anderen Werkstoffen sind z. B. das Kleben, das Klemmen oder das Umschäumen von Einlegeteilen. Beispielsweise kann man Schaumkörper in Fahrradhelmen mit der Hartschale verkleben. Die Befestigungslaschen für den Kinnriemen bei diesen Fahrradhelmen werden bei der Produktion der Schaumkörper aus den Partikelschaumstoffen mit eingeschäumt. Das Erfordernis zwei Formkörper aus Partikelschaumstoffen untereinander dauerhaft zu verbinden, trat bislang deshalb weniger häufig auf, da man im Prinzip bei der Verwendung von Partikelschaumstoffen als Werkstoff die Möglichkeit hat, Formkörper mit fast beliebiger Geometrie herzustellen. Wenn man jedoch solche Bauteile aus Partikelschaumstoffen miteinander verbunden hat, so erfolgte dies bislang nach dem Stand der Technik meist durch Kleben. Diese Verklebung solcher Schaumstoffbauteile hat jedoch den Nachteil, dass die Festigkeit im Verbindungsbereich nicht immer ausreichend bzw. genügend dauerhaft ist. Beim Verkleben traten außerdem folgende Probleme auf:
Bei der Adhäsionsklebung sind die Bindungskräfte physikalischer Natur und basieren auf Nebenvalenzbindungen. Adhäsionsklebungen sind gut mit polaren Kunststoffen möglich, jedoch weniger gut mit nicht polaren Kunststoffen. Letztere können durch eine Oberflächenbehandlung "kfebefreundlicher" gemacht werden. Da es sich jedoch bei den Partikelschaumstoffen meist um unpolare Kunststoffe handelt, ist eine auch langfristig feste Adhäsionsklebung nur mit einer vorherigen Oberflächenaktivierung (Koronabehandlung) möglich, was einen zusätzlichen Aufwand mit sich bringt.
Bei der Diffusionsklebung diffundieren Lösungsmittel, Monomere oder andere diffusionsfähige Bestandteile des Klebstoffs in den Kunststoff ein und bewirken durch Quellung und Lösen Molekularbewegungen, die zu einer homogenen Verbindung nach Art einer Schweißnaht führen. Durch die diffundierenden Anteile können die mechanischen Eigenschaften der Fügeteile im Bereich der Fügezone verändert werden, z. B. kann Spannungsrissbildung bei amorphen Thermoplasten auftreten. Die für Partikelschaumstoffe meist verwendeten Polyolefine besitzen eine hohe Beständigkeit und sind oft mit gängigen, halbwegs umweltfreundlichen Lösungsmitteln nicht anzulösen.

JP-A-60008042 beschreibt ein Verfahren zur Herstellung eines Kernmaterials für Stoßdämpfer. Dabei werden zunächst die miteinander zu verbindenden Formstücke aus Polypropylen-Partikelschaumstoff durch Verschweißen der PP-Schaumstoffpartikel in einem Formraum durch Erhitzen hergestellt. Nachfolgend oder während des Formens werden die zu verbindenden Oberflächen mechanisch vorbehandelt, indem sie mit Kerben definierter Abmessungen versehen werden. Das Verbinden schließlich erfolgt durch Zusammenstoßen der gekerbten Bereiche und nachfolgendem Erhitzen. In GB-A-1 262 167 wird ein Verfahren zur Herstellung von Schaumstoffplatten und -blöcken offenbart, bei dem die Oberflächen von Bahnen oder Platten aus Partikelschaumstoff vollflächig thermisch aufgeschmolzen und dann aufeinander gepresst werden, wodurch die Bauteile miteinander verkleben.

Der Erfindung liegt daher die Aufgabe zugrunde, ein Verfahren zum Verbinden von Bauteilen aus Partikelschaumstoffen zu schaffen, das mit möglichst geringem Prozessaufwand zu einer dauerhaften Verbindung der Bauteile mit guten Festigkeitswerten und einer hohen Endabmessungsgenauigkeit führt.

Die Lösung dieser Aufgabe liefert ein erfindungsgemäßes Verfahren zum Verbinden von Bauteilen aus Partikelschaumstoffen mit den Merkmalen des Anspruchs 1. Erfindungsgemäß ist vorgesehen, dass man die Fügefläche wenigstens des Partikelschaumstoff-Bauteils teilweise erwärmt, derart, dass sich das Bauteil an seiner Oberfläche in einer Raumrichtung senkrecht zur Fügefläche ausdehnt, wobei man die nicht zu erwärmenden Teilbereiche der Fügeflächen durch Blenden abschirmt, und man anschließend die Fügeflächen der zu verbindenden Bauteile gegeneinander presst und so die Bauteile im Bereich der Fügeflächen miteinander verschweißt.

Ein derartiges Verschweißen der Bauteile aus Partikelschaumstoffen nach teilweiser Erwärmung der Fügefläche wenigstens eines Bauteils ist als Verfahren einfacher als z. B. das Kleben, da zusätzliche vorbereitende Arbeitsgänge entfallen können. Die Abschattung von Teilbereichen der Fügefläche bewirkt - neben der offensichtlichen Möglichkeit, gezielt teilflächige Verbindungen herzustellen - dass die abgeschatteten Bereiche nicht aufgeschmolzen werden. Somit ist es möglich, durch Abschattung gezielt Stege aus nicht aufgeschmolzenen Partikeln zu erzeugen, die bei dem Zusammenschweißen der beiden Teile quasi als Abstandsgeber funktionieren und das gewünschte Endmaß des Verbundbauteiles einhalten.

Partikelschaumstoffe zeichnen sich dadurch aus, dass sich das Material bei Erwärmung ausdehnt und diese Ausdehnung vorwiegend in nur eine Raumrichtung erfolgt. Dies kann man für das Verschweißen von Bauteilen aus Partikelschaumstoffen nach dem erfindungsgemäßen Verfahren nutzen.

Bei Bauteilen aus Partikelschaumstoffen, z. B. expandiertem Polypropylen (EPP), unterscheidet man zwei Oberflächenarten:
1. Die geschlossenzellige Oberfläche, die sich im Ausschäumwerkzeug durch das Verschweißen der EPP-Partikel bildet. Die EPP-Partikel werden gegen die Werkzeugwandung gepresst und verschmelzen dort zu einer "glatten" Oberfläche.
2. Die offenzellige Oberfläche entsteht beispielsweise durch das Zerschneiden von EPP-Bauteilen. Die Oberfläche besteht aus den Stegen der Zellwände und dem Zellgerüst und im Gegensatz zu der vorbeschriebenen geschlossenzelligen Oberfläche ist sie rau und offenporig.

Partikelschaumstoffe mit geschlossenzelliger Oberfläche sind im Rahmen der vorliegenden Erfindung bevorzugt. Bei dieser geschlossenzelligen Oberfläche sind die Partikel an der Oberfläche flach gepresst. Bei Erhitzen der Oberfläche erwärmt sich die obere Schicht der Partikel. Bei Erreichen des zähelastischen Punktes dehnen sich die Partikel aufgrund des sich ausdehnenden Zellgases aus. Da ein Ausdehnen nach unten und zu den Seiten hin nicht möglich ist, gehen die Partikel nach oben auf. Diese Dehnung wird von der durch die Wärme zähelastischen Zelloberfläche aufgenommen. Es erfolgt also ein Aufblähen des Partikelschaumstoffs und die Oberfläche erhöht sich je nach Dichte des Werkstoffs. Je geringer das Raumgewicht des Partikelschaumstoffs ist, umso stärker ist das Aufblähen, da dann das Luftvolumen in den Partikeln größer ist.

Um die Fügeflächeh der miteinander zu verbindenden Bauteile aus Partikelschaumstoffen wenigstens teilweise zu erwärmen stehen verschiedene Methoden zur Verfügung. Beispielsweise kommt das Erwärmen durch Warmgas und/oder ein Heizelement und/oder Rotationsreibung und/oder Vibrationen und/oder Heizstrahler in Betracht. Im Rahmen der vorliegenden Erfindung ist das Erwärmen durch Infrarotwärmestrahler bevorzugt, da es im Verfahrensablauf gewisse Vorteile aufweist.

Erwärmt man wenigstens teilweise wenigstens eine der Fügeflächen der zu verbindenden Bauteile durch Infrarotstrahlung, dann kann man einen Teil der Oberfläche (Fügefläche) des Bauteils, der nicht erwärmt werden soll, durch Blenden abschatten. In diesem Fall gelangt die IR-Wärmestrahlung nur an die nicht abgeschatteten Bereiche und bläht diese im Oberflächenbereich auf und schmilzt sie an. Um zu einer effektiven Verbindung zu gelangen wählt man daher vorzugsweise eine solche Temperatur für die Erwärmung der Fügefläche, bei der ein Aufschmelzen oder Anschmelzen der Fügefläche sichtbar ist. Diese Temperatur ist naturgemäß von der Art des Partikelschaumstoffs abhängig und kann empirisch bestimmt werden.

Verwendet man Blenden zum Abschatten von Teilbereichen der Fügeflächen, erhält man nach der Wärmeeinwirkung ein Bauteil, bei dem durch das Aufblähen der erwärmte Bereich der Oberfläche gegenüber den abgeschatteten Bereichen vorsteht. Dies ist bei der Verbindung der Fügeflächen zweier Bauteile von Vorteil. Treffen zwei angeschmolzene vorstehende Bereiche der Fügeflächen aufeinander, so verschweißen diese miteinander und man erhält ein Verbundbauteil mit guter Festigkeit im Bereich der Schweißverbindung. Die Festigkeit dieser Schweißverbindung entspricht in der Regel wenigstens der der Schweißverbindung der Schaumstoffpartikel der Ausgangsbauteile untereinander. Mit einem Verzug der Bauteile durch die nur teilweise Erwärmung des Werkstoffs ist nicht zu rechnen, da das Material eine schlechte Wärmeleitung besitzt und keine Aufheizung des gesamten Bauteils erfolgt. Hier sind allerdings relativ kurze Aufwärmzeiten von vorzugsweise weniger als etwa 60 Sekunden bevorzugt.

Das erfindungsgemäße Verfahren ist grundsätzlich bei allen Partikelschaumstoffen einsetzbar, vorzugsweise bei solchen, die ähnliche Eigenschaften besitzen wie Polypropylen. Im Prinzip kommt auch eine Anwendung für andere Werkstoffe in Betracht, die sich bei Erwärmung nur in eine Raumrichtung, insbesondere nach oben hin, ausdehnen.

Partikelschäume, insbesondere solche, die ähnliche Eigenschaften besitzen wie das expandierte Polypropylen (EPP), besitzen aufgrund ihrer physikalisch/chemischen Beschaffenheit eine Vielzahl positiver Eigenschaften:
- hohes Energieaufnahmevermögen über einen weiten Temperaturbereich
- ein sehr gutes Rückstellvermögen nach statischer und dynamischer Beanspruchung
- gute Zugfestigkeit
- geringe Kerbempfindlichkeit
- eine Reißdehnung zwischen 11 % und 15 %
- eine Temperaturbeständigkeit zwischen -40°und +110°C
- eine niedrige Wärmeleitfähigkeit
- eine geringe Wasseraufnahme
- Chemikalienbeständigkeit.

Bei dem erfindungsgemäßen Verschweißen der Bauteile aus Partikelschaumstoffen fügt man die durch Erwärmung in den viskoseelastischen Zustand versetzten Stellen (Fügeflächen) unter Druck so zusammen, dass an der Schweißstelle eine möglichst homogene Verbindung entsteht. Die ursprünglich vorhandene Grenzfläche zwischen den Fügeteilen verschwindet dadurch, dass Teile der Molekülketten (Kettensegmente) durch die Grenzfläche diffundieren und sich mit anderen Molekülketten wieder verhaken (Diffusionstheorie). Voraussetzung hierfür ist, dass der erwärmte Thermoplast genügend fließfähig ist und sich in der Fügenaht homogen verteilt.

Es empfiehlt sich, bei dem Gegeneinanderpressen der Fügeflächen der zu verbindenden Bauteile, dabei einen solchen Druck auszuüben, dass die Fügeflächen vorzugsweise mit einer Flächenlast von etwa 1 N/cm² bis 20 N/cm² vorzugsweise mit einer Flächenlast von etwa 4 N/cm² bis etwa 14 N/cm², gegeneinander gepresst werden. Außerdem lässt man vorzugsweise die verbundenen Bauteile nach dem Gegeneinanderpressen der Fügeflächen unter Druck abkühlen.

Die in den Unteransprüchen genannten Merkmale betreffen bevorzugte Weiterbildungen der erfindungsgemäßen Aufgabenlösung. Weitere Vorteile der Erfindung ergeben sich aus der

nachfolgenden Detailbeschreibung.

Die Erfindung wird nun anhand von Ausführungsbeispielen unter Bezugnahme auf die beiliegenden Zeichnungen näher beschrieben. Dabei zeigen:
- Fig. 1: eine schematisch vereinfachte Ansicht einer Einrichtung zur Erwärmung der Fügefläche eines EPP-Probekörpers durch Infrarotstrahlung nach dem erfindungsgemäßen Verfahren;
- Fig. 2a bis 2d: in vier Ansichten das Verhalten eines Bauteiles aus EPP bei Erwärmung mit IR-Strahlung;
- Fig. 3: eine schematisch vereinfachte Ansicht einer Einrichtung zur teilweisen Bestrahlung der Oberfläche eines EPP-Bauteils mit IR-Strahlung;
- Fig. 4a: zwei zu verbindende Bauteile aus EPP vor dem Verschweißen;
- Fig. 4b: die gleichen Bauteile nach dem Verschweißen;
- Fig. 5: ein EPP-Bauteil mit gesägter Oberfläche nach der Erwärmung;
- Fig. 6: einen EPP-Probekörper mit gesägter Oberfläche gemäß einer weiteren Variante der Erfindung;
- Fig. 7: einen ersten Probekörper aus Partikelschaumstoff, der für Versuche im Rahmen des erfindungsgemäßen Verfahrens angefertigt wurde;
- Fig. 8a: einen zweiten Probekörper aus Polypropylen, der für Versuche im Rahmen des erfindungsgemäßen Verfahrens angefertigt wurde, in der Seitenansicht;
- Fig. 8b: den Probekörper gemäß Fig. 8a in der Vorderansicht;
- Fig. 9: einen Infrarot-Schweißautomaten für Bauteile aus Partikelschaumstoffen, der für ein erfindungsgemäßes Verfahren verwendbar ist;
- Fig. 10a: in schematisch vereinfachter Darstellung eine erste Phase des Fertigungsablaufs beim Verbinden von Bauteilen aus Partikelschaumstoff in einem Verfahren gemäß Erfindung;
- Fig. 10b: eine entsprechende schematische Darstellung in einer zweiten Phase des Fertigungsablaufs;
- Fig. 10c: eine entsprechende schematische Darstellung in einer dritten Phase des Fertigungsablaufs;
- Fig. 10d: eine entsprechende schematische Darstellung in einer vierten Phase des Fertigungsablaufs;
- Fig. 10e: eine entsprechende schematische Darstellung in einer fünften Phase des Fertigungsablaufs;
- Fig. 10f: eine entsprechende schematische Darstellung in einer sechsten Phase des Fertigungsablaufs und
- Fig. 10g: eine entsprechende schematische Darstellung in einer siebten Phase des Fertigungsablaufs.

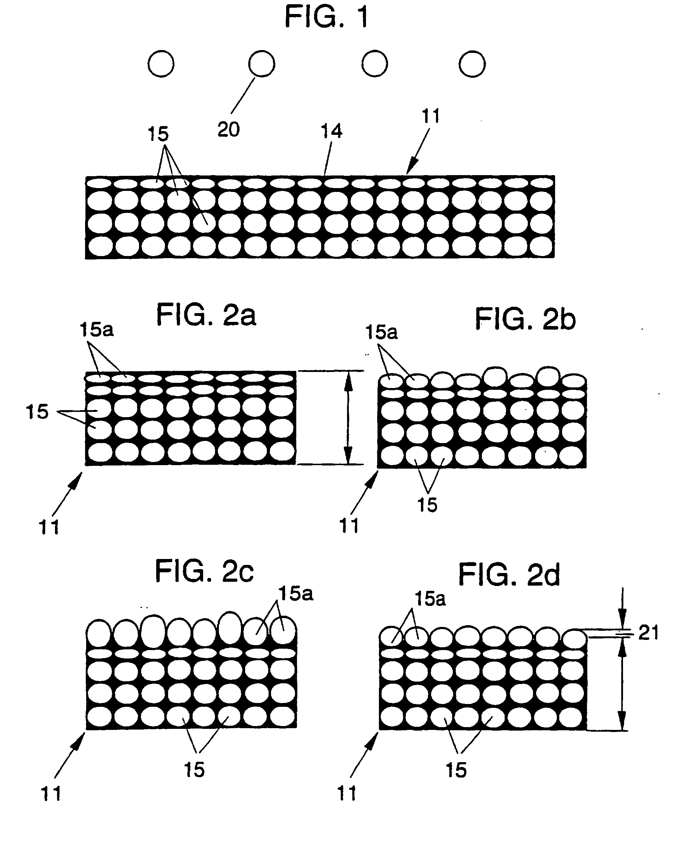

Zunächst wird auf Fig. 1 Bezug genommen. Die Darstellung zeigt ein Bauteil 11 aus expandiertem Polypropylen (EPP-Probekörper), dessen Oberfläche 14 nach dem erfindungsgemäßen Verfahren durch Infrarotwärmestrahler 20, die über dem Bauteil mit Abstand zu diesem angeordnet sind, bestrahlt und somit erwärmt wird. Es handelt sich bei dem Ausführungsbeispiel gemäß Fig. 1 um ein Bauteil 11 aus EPP mit einer geschlossenen Oberfläche 14. Wie man sieht, besteht das im Schnitt dargestellte Bauteil 11 aus einer Vielzahl miteinander verbundener Schaumstoffpartikel 15, wobei diese in der obersten Schicht flach gedrückt sind, was von dem Herstellungsverfahren des Bauteils 11 herrührt, worauf weiter unten noch näher eingegangen wird.

Die Oberfläche 14 des Bauteils 11 entspricht der späteren Fügefläche, wobei man durch die IR-Wärmestrahler 2.die Fügefläche 14 vollständig erwärmen kann oder nur eine Teilfläche.

Das Verhalten des EPP-Probekörpers mit abgeflachten Schaumstoffpartikeln 15 im Oberflächenbereich wie sie auch bei dem Bauteil gemäß Fig. 1 vorhanden sind, bei Einwirkung von IR-Wärmestrahlung wird unter Bezugnahme auf die Figuren 2a bis 2d näher erläutert. Fig. 2a zeigt einen EPP-Probekörper 11 mit glatter Oberfläche 14, ähnlich wie in Fig. 1 vor der Erwärmung. Die Schaumstoffpartikel aus denen sich das Bauteil 11 zusammensetzt, sind mit 15 bezeichnet. Die abgeflachten Schaumstoffpartikel in der obersten Schicht haben das Bezugszeichen 15a.

In Fig. 2b wirkt die lnfrarotwärmestrahlung von oben auf den EPP-Probekör 11. Wie man sieht, sind die Schaumstoffpartikel 15a in der obersten Schicht durch die Erwärmung bereits soweit aufgebläht, dass sie anstelle der flachovalen Form mehr kugelförmig sind, da sie sich nach oben hin ausdehnen. Nach unten hin können sie sich dagegen nicht ausdehnen, da dort weitere Schichten von Schaumstoffpartikeln 15 dies verhindern.

Fig. 2c zeigt den Zustand des EPP-Bauteils 11 während der weiteren Erwärmung. Die Schaumstoffpartikel 15a der obersten Schicht blähen sich weiter auf, verlassen dadurch die Kugelform und haben im Querschnitt eine eher ovale Form mit größter Ausdehnung in vertikaler Richtung.

Fig. 2d zeigt schließlich den Zustand des EPP-Bauteils 11 mit glatter Oberfläche nach dem Abkühlen. Wie man sieht, haben sich die Schaumstoffpartikel 15a der obersten Schicht gegenüber der Darstellung gemäß Fig. 2c wieder etwas zusammengezogen und haben annähernd eine Kugelform, ähnlich wie die übrigen Schaumstoffpartikel 15. Während der Abkühlung zieht sich die Luft in den EPP-Partikeln 15a zusammen, so dass diese schrumpfen. Nach dem Abkühlen unterhalb des Fließbereiches ist kein Schrumpfen der Partikel 15a mehr möglich, so dass bei weiterer Abkühlung der Luft ein Unterdruck in den Partikeln entsteht. Dieser lässt im Laufe einiger Tage nach, da durch die EPP-Oberfläche 14 Luftmoleküle in die Partikel 15a diffundieren.

Durch Vergleich der Höhe des EPP-Bauteils 11, das in Fig. 2d dargestellt ist, mit derjenigen des EPP-Bauteils 11 vor der Erwärmung gemäß der Darstellung nach Fig. 2a ergibt sich das Aufmaß des Bauteils 11 infolge der Erwärmung und Wiederabkühlung in Richtung senkrecht zur Oberfläche 14 und damit zur späteren Fügefläche. Wie Messungen ergeben haben, kann dieses Aufmaß, das jeweils durch den Pfeil 21 kenntlich gemacht ist, beispielsweise 3 % bis 10 % betragen, wobei der Absolutwert bei ca. 0,5 - 2 mm liegt.

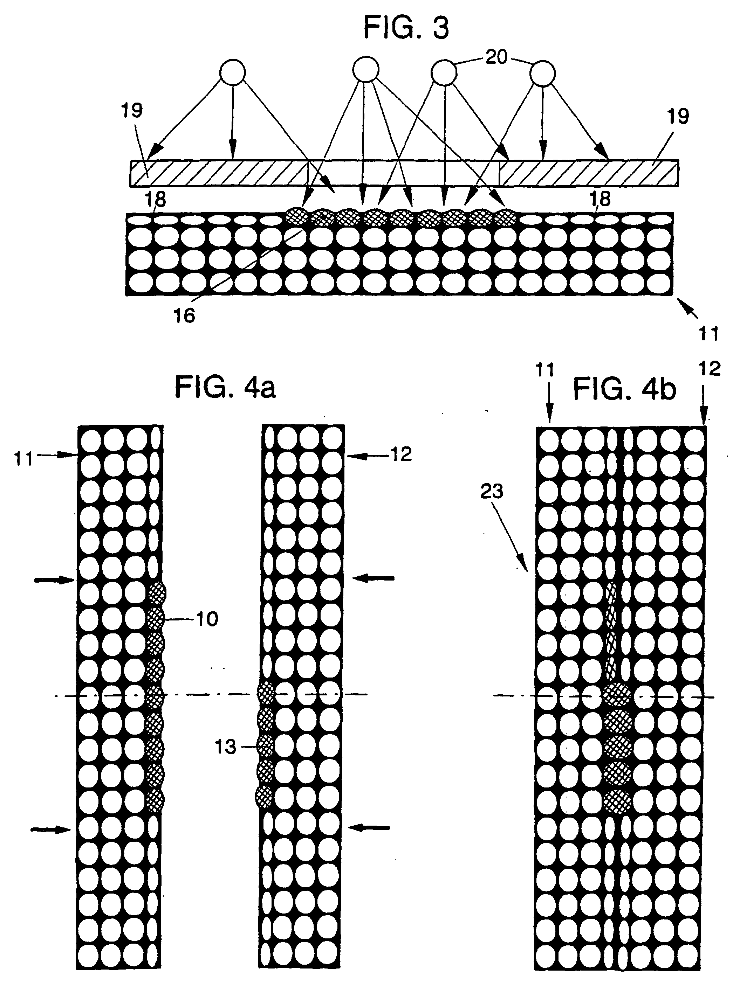

Nachfolgend wird auf Fig. 3 Bezug genommen und anhand dieser Darstellung der Versuchsaufbau bei der nur teilweisen Erwärmung der Fügefläche eines EPP-Probekörpers 11 erläutert. Zur Erwärmung der Oberfläche 14 sind hier wiederum Infrarotstrahler 20 über dem EPP-Bauteil 11 angeordnet. Es werden jedoch hier Blenden 19 verwendet um einen Teilbereich 18 der Oberfläche 14 des EPP-Bauteils 11 gegen die IR-Strahlung abzuschatten. Dieser abgeschattete Teilbereich 18 liegt, wie man sieht, bei dem Bauteil 11 jeweils rechts und links, während dazwischen ein erwärmter Teilbereich 16 liegt, in dem sich die EPP-Partikel im Oberflächenbereich ausdehnen, da dort die IR-Strahlung nicht abgeschirmt wird.

Die Tatsache, dass man so teilweise aufgeblähte Bereiche 16 der Fügefläche erhält, kann man bei der Verbindung mit anderen EPP-Bauteilen nutzen. Durch diese Aufblähung steht der nicht abgeschattete Teilbereich 16 etwas gegenüber diesen abgeschatteten Teilbereichen 18, die ja kein Aufmaß in Richtung senkrecht zur Fügefläche haben, vor und bildet eine Art Steg 22. Durch diese Stege 22 kann die Verbindung mit weiteren EPP-Bauteilen nach dem erfindungsgemäßen Verfahren erleichtert werden. Es erübrigt sich somit, solche Stege 22 anderweitig zu erzeugen, denn sie ergeben sich durch das Expandieren der Schaumstoffpartikel bei der Erwärmung quasi von selbst.

Im Rahmen der vorliegenden Erfindung wurde auch untersucht, wie sich eine erwärmte und aufgeblähte Fügefläche wie z. B. der Teilbereich 16 in Fig. 3, verhält, wenn sie auf den abgeschatteten Bereich, d. h. also den kalten Bereich, einer zweiten Fügefläche eines zweiten Bauteils 12 trifft. Dazu wurden zwei miteinander zu verbindende Bauteile 11, 12 so mit IR-Strahlung unter teilweiser Abschottung durch Blenden 19 behandelt, dass die zu verbindenden Fügeflächen der Bauteile 11, 12 unterschiedlich große Abmessungen hatten, wie dies in Fig. 4a dargestellt ist. Hier hat das linke Bauteil 11 eine größere erwärmte Fügefläche 10 und das rechte Bauteil 12 hat eine kleinere erwärmte und somit aufgeblähte Fügefläche 13. Die beiden Bauteile werden in dem erfindungsgemäßen Verfahren in Pfeilrichtung, d. h. senkrecht zu ihren jeweiligen Fügeflächen 10 bzw. 13, gegeneinander gepresst. Dabei trifft zwangsläufig ein Teil der erwärmten Fügefläche 10 des linken Bauteils 11 auf die kalte Fügefläche 13 des rechten Bauteils 12.

Das Ergebnis dieses Arbeitsschritts zeigt Fig. 4b. Dort sieht man die beiden miteinander verbundenen Bauteile 11, 12 nach dem Aufeinanderpressen und Miteinanderverschweißen. Es konnte festgestellt werden, dass in dem Bereich, in dem zwei erwärmte Flächen aufeinander treffen, dies ist in den Fig. 4a und 4b die untere Hälfte der beiden Bauteile 11, 12, eine Verschweißung erfolgt. Dort wo eine erwärmte auf eine nicht erwärmte Fläche trifft (in der oberen Hälfte der Fügeflächen 10 bzw. 13 der beiden Bauteile 11, 12 in Fig. 4a bzw. 4b) gehen die aufgeblähten EPP-Partikel unter dem Fügedruck auf das Ausgangsmaß zurück. Es entsteht somit kein Aufmaß, das bei der Auslegung von Fügeteilen berücksichtigt werden muss. Diese Eigenschaft lässt sich bei einer Fertigung nutzen, da die Bereiche, in denen zwei nicht erwärmte Flächen aufeinander treffen, als Bezugsflächen für das Sollmaß des Verbundbauteils dienen können. Die erwärmten Bereiche, in denen sich die Partikel des EPP aufblähen bzw. schmelzen, sind in den Fig. 4a bzw. 4b dunkel dargestellt. Das Verbundbauteil ist mit 23 bezeichnet. In der oberen Hälfte der Zeichnung Fig. 4b hat zwischen den Fügeflächen der Ausgangsbauteile 11, 12 keine Verschweißung stattgefunden, wohingegen in der unteren Hälfte wegen des Aufeinandertreffens zweier erwärmter Flächen eine Verschweißung stattgefunden hat.

In weiteren Versuchen wurde untersucht, ob es möglich ist, in einem erfindungsgemäßen Verfahren zwei Bauteile auf ein vorgegebenes Sollmaß zu verschweißen. Für das Verbundbauteil wurde dabei ein Sollmaß in der Ausdehnungsrichtung senkrecht zu den Fügeflächen der Ausgangsbauteile festgelegt. Die Fügeflächen der Bauteile wurden in der vorbeschriebenen Art erwärmt und die beiden Bauteile miteinander verschweißt. Es wurden auf diese Art verschiedene Verbundbauteile gefertigt und nach dem Abkühlen auf Zimmertemperatur wurden diese vermessen. Die Ergebnisse von fünf solchen Versuchen sind in der nachfolgenden Tabelle wiedergegeben.

| | Sollmaß [mm] | Toleranz | Istmaß Teil 2 [mm] | Istmaß Teil 1 [mm] | Istmaß ZSB [mm] | Sollmaß eingehalten |
|---|---|---|---|---|---|---|
| Versuch 1: | 40 | ± 0,49 | 20,3 | 19,8 | 40,3 | **JA** |
| Versuch 2: | 40 | ± 0,49 | 20,0 | 20,2 | 40,4 | **JA** |
| Versuch 3: | 40 | ± 0,49 | 19,9 | 21,3 | 40,3 | **JA** |
| Versuch 4: | 40 | ± 0,49 | 19,8 | 20,1 | 40,1 | **JA** |
| Versuch 5: | 40 | ± 0,49 | 20,3 | 19,9 | 40,3 | **JA** |

Die Verbundbauteile sind jeweils in der Tabelle mit ZSB bezeichnet. Es zeigt sich, dass die Sollmaße bei allen gefertigten Verbundbauteilen eingehalten wurden. Das Istmaß liegt zwar jeweils etwas oberhalb der Sollwerte, es liegt jedoch innerhalb der vorgegebenen Toleranz.

In weiteren Versuchen wurde durch Variieren der Größe der Blenden die Breite der nicht abgeschatteten erwärmten Bereiche der Fügefläche variiert. Bei diesen Versuchen ergab sich, dass es vorteilhaft ist, wenn eines der zu verbindenden Bauteile aus expandiertem Polypropylen wenigstens eine Ausdehnung von etwa 5 mm in einer Richtung, weiter vorzugsweise eine Breite von etwa 7,5 mm hat.

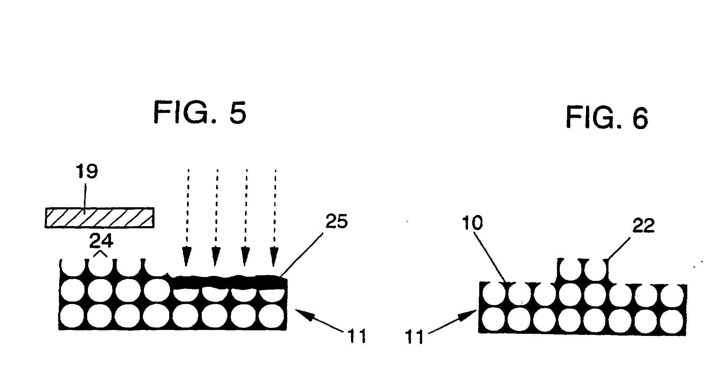

In einem Verfahren gemäß einer weiteren Variante der folgenden Erfindung wurden Bauteile aus expandiertem Polypropylen untersucht, die keine glatte sondern eine gesägte Oberfläche aufwiesen. Diese Oberflächen entstehen z. B. bei der Bearbeitung von EPP-Formkörpern mittels einer Fräse oder beim Sägen. In diesem Fall besteht der Oberflächenbereich des EPP-Bauteils 11, wie man aus Fig. 5 (linke Seite) erkennen kann, nicht aus einer geschlossenen EPP-Schicht wie bei der glatten Oberfläche, sondern die Oberfläche wird aus den nach oben gerichteten Zellwänden 24 der offenen Zellen der obersten Schicht gebildet.

Wenn man eine solche gesägte Oberfläche nun erwärmt, dann kommt es zu einem Wegschmelzen der Zellwände 24 und bei weiterer Erwärmung bildet sich eine geschlossene Schmelzschicht in dem erwärmten Bereich. Dies ist in Fig. 5 dargestellt. Der erwärmte Bereich ist hier mit 25 bezeichnet. Dieser Bereich 25 wurde der von oben einwirkenden IR-Strahlung ausgesetzt. Der linke Teilbereich in Fig. 5 wurde dagegen mit der Blende 19 abgeschattet, so dass dort kein Anschmelzen der Oberfläche zu verzeichnen ist und die Zellwände 24 stehen bleiben.

Das Wegschmelzen der Oberfläche kommt dadurch zustande, dass die Zellwände bei der Erwärmung in den viskosen zähelastischen Zustand übergehen. Die obere Schicht der Zellwände erreicht diesen Zustand eher und bildet eine Schmelze, die in die Zwischenräume zwischen die Zellwände läuft. Da dieses Material nun nicht mehr als Steg zur Verfügung steht, erfolgt ein Zurückweichen der Oberfläche im erwärmten Bereich. Die Oberfläche geht also in dem erwärmten rechten Bereich 25 in der Fig. 5 unter das durch die Enden der Zellwände 24 gebildete Ausgangsmaßzurück.

Man kann den vorgenannten Effekt nutzen, indem man EPP-Bauteile 11 mit gesägter Oberfläche bei der Bestrahlung mit IR-Wärmestrahlung teilweise abschattet. Ein Bauteil 11 mit einem solchen Steg 22 ist in Fig. 6 dargestellt. Ein solches EPP-Bauteil 11 mit Steg 22 kann man z. B. durch Sägen herstellen. Die Höhe des Steges ist variabel und beträgt in den Ausführungsbeispielen gemäß Fig. 6 beispielsweise etwa 5 mm, d. h. der Steg hat beispielsweise ein Aufmaß von 5 % gegenüber der übrigen Höhe des Bauteils 11 senkrecht zur Fügefläche. Der Steg 22 ist schmaler als das gesamte Bauteil 11 in einer Ausdehnungsrichtung der Fügefläche, die hier mit 10 bezeichnet ist.

Man kann nun ein solches Bauteil 11 mit Steg 22, wie es in Fig. 6 dargestellt ist, im Bereich des Stegs erwärmen und mit einem ebensolchen Bauteil (nicht dargestellt) mit Steg, der ebenfalls erwärmt wurde, so verbinden, dass die Stege der beiden Bauteile übereinander liegen. In diesem Fall ergibt sich ebenfalls eine gute Verbindung der Bauteile im Bereich ihrer Fügeflächen. Allerdings ist für das Sägen des Stegs 22 ein zusätzlicher Arbeitsgang erforderlich.

Nachfolgend werden weitere Varianten des erfindungsgemäßen Verfahrens näher beschrieben, wobei im Rahmen der nachfolgenden Ausführungsbeispiele auch die Verbindung von Bauteilen aus anderen Partikelschaumstoffen untereinander bzw. mit anderen Werkstoffen untersucht wurde. Die beispielhaft ausgewählten Werkstoffe, die dabei zur Anwendung gelangten werden nachfolgend zunächst einmal erläutert:

### Thermoplastische Polyolefinelastomere

Bei Thermoplastischen Polyolefinelastomeren (TPO) handelt es sich um eine Kombination von vollvernetztem EPDM und PP.

### TPO

PP und EPDM lassen sich in allen Mischungsverhältnissen miteinander kombinieren, so dass theoretisch ein Kontinuum von elastifiziertem PP bis zu mit Thermoplasten verstärktem EPDM besteht. Die Eigenschaften des PP-reichen Verschnittes hängen hauptsächlich von der EPDM-Menge sowie der Größe und Gleichmäßigkeit der Kautschukphase ab. Diese Materialien sind relativ wenig elastisch und weisen eine geringe Bruchdehnung auf. Durch die Kombination von EPDM mit PP erhält man somit TPO, die über einen weiten Temperaturbereich (-40° bis + 125°C) gummielastisch sind. TPO enthält wenig niedermolekulare und leichtflüchtige Substanzen, somit lassen sich gute Foggingwerte erzielen, die das für den PKW nicht unerhebliche Geruchsverhalten positiv beeinflussen.

### Schweißverfahren

Untersucht wird, wie sich verschiedene Schweißverfahren bei der Verbindung unterschiedlicher PP-Materialien- EPP/EPP, EPP/PP, TPO-Folie/PP eignen.

### Grundlagen:

Beim Schweißen erfolgt die Verbindung durch Aufschmelzen der Fügeflächen, welche unter Fügedruck fließen.

Erzeugt werden kann die Schmelzschicht durch Fremderwärmung (Heizelement, Warmgas) oder durch Eigenerwärmung (äußere Reibung, innere Reibung). Die Arbeitsschritte sind bei allen Verfahren gleich:
a) Vorbereiten der Fügefläche (z. B. Reinigen)
b) Erwärmung der Fügefläche, bis die Fügefläche in einen thermoplastischen Zustand übergegangen ist
c) Zusammenpressen der Fügeflächen
d) Abkühlen unter Druck

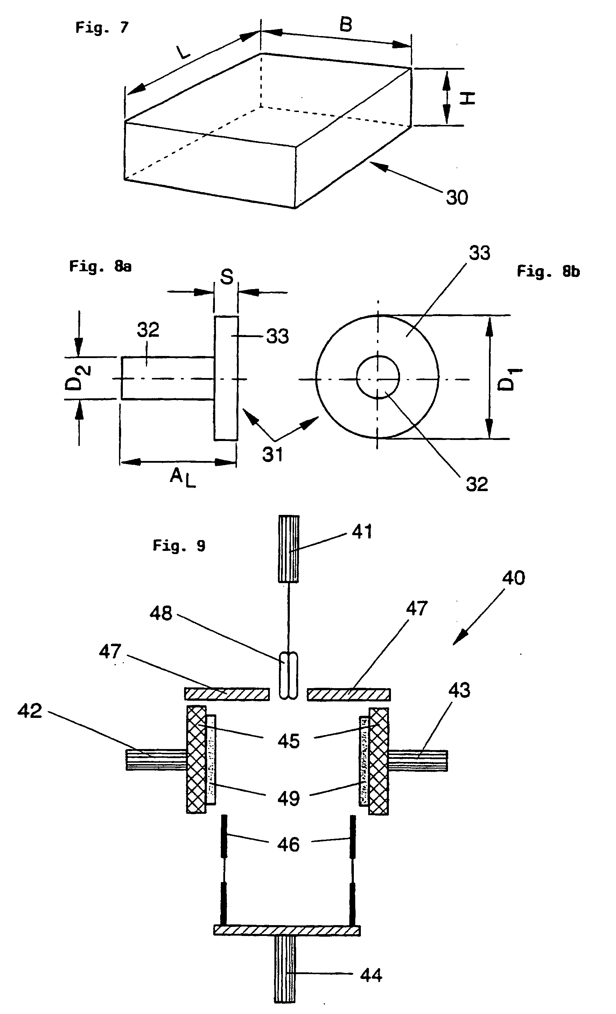

Für die nachfolgend genannten Versuchsbeispiele wurden Probekörper aus EPP verwendet, wie sie in Fig. 7 dargestellt sind. Es handelt sich um quaderförmige Probekörper 30 mit einer Länge L von 45 mm, einer Breite B von 40 mm und einer Höhe H von 15 mm. Diese EPP-Probekörper bestanden aus einem EPP-Partikelschaumstoff der Dichte 65 g/l, die Fügefläche betrug 18 cm².

Weiter wurden in den nachfolgenden Beispielen Probekörper aus kompaktem (nicht expandiertem) Polypropylen (PP) verwendet wie sie in den Fig. 8a und 8b dargestellt sind. Es handelte sich um rotationssymmetrische Probekörper 31 mit einem zylindrischen Schaft 32 und einem zylindrischen Kopf 33. Der Durchmesser D₁ des Kopfs 33 betrug 25 mm, der Durchmesser D₂ des Schafts betrug 10 mm. Die Stärke S des Kopfs 33 betrug 3 mm. Die axiale Länge AL des gesamten Probekörpers betrug 18 mm. Die Fügefläche betrug 4,9 cm².

Bei jeder Versuchsreihe gemäß den nachfolgenden Beispielen wurden mehrere Probekörper untersucht, wobei anschließend nach der Abkühlung die verbundenen Teile einer optischen und mechanischen Prüfung unterzogen wurden. Bei der optischen Prüfung wurde die Güte der Schweißung durch Untersuchung der Schweißnaht geprüft. Dies erfolgte unter dem Mikroskop, wobei geprüft wurde, ob die Gefüge der beiden Thermoplaste miteinander verschmolzen sind oder ob nur eine formschlüssige Verbindung erreicht wurde. Die mechanische Prüfung bestand aus einem Bruchtest. Mit diesem Bruchtest wurde versucht, die beiden Probekörper an der Schweißnaht auseinander zu brechen, um die Bruchkante an der Grenzfläche zu untersuchen. Weitergehende Untersuchungen auf Zugfestigkeit, Wärmebeständigkeit usw. der Schweißungen wurden durchgeführt.

### Beispiel 1.1:

Zwei Probekörper aus EPP gemäß Fig. 7 mit jeweils einer Fügefläche von 18 cm² wurden bei einer Flächenpressung während des Fügens von 4 N/cm² aufeinander gepresst. Das Erhitzen der Fügeteile erfolgte durch Warmgasschweißen bei einer Luftstromtemperatur von 450° C. Die Teile wurden erhitzt, bis ein Aufschmelzen an der Fügefläche sichtbar ist, und zusammengepresst.

Die Auswertung ergab, dass die Festigkeit der Verbindung der EPP-Bauteile gut war. Allerdings schmilzt bei dieser Art der Erwärmung der Fügefläche das EPP etwas nach hinten weg, was durch den Druck des Heißluftstromes verstärkt wird. Dadurch entsteht eine Schweißfläche, in der Hohlräume zu erkennen sind.

### Beispiel 1.2:

Es wurde ein EPP-Probekörper gemäß Fig. 7 mit einem Polypropylen-Probekörper (PP) gemäß Fig. 8a, 8b verschweißt. Erhitzt wurde nur die Fläche des PP-Bauteils, bis eine Schmelze zu erkennen ist. Dann wurde das PP-Bauteil mit einer Flächenlast von 14 N/cm² auf das EPP-Bauteil gepresst, wobei die Fügefläche 4,9 cm² betrug. Die Wärmekapazität des PP-Bauteils wurde genutzt, um ein Anschmelzen der EPP-Fügefläche zu erreichen.

Die Auswertung ergab, dass die Erwärmung der Fügefläche des PP-Bauteils 31 ausreicht und die beiden Bauteile zu einem Verbundbauteil verschmelzen. Die Festigkeit der Schweißverbindung ist gut.

### Beispiel 2.1:

Bei diesem Versuch wurden zwei EPP-Bauteile 30 gemäß Fig. 7 verbunden, wobei die Erwärmung der Fügeflächen diesmal durch Heizelementschweißen erfolgte. Beide EPP-Bauteile wurden am Heizspiegel angeschmolzen und zusammengefügt. Der Heizspiegel wurde bei einer Temperatur zwischen 130° und 150° C betrieben.

Die Auswertung ergab, dass eine Verbindung der Bauteile mit guter Verschweißung erhalten wurde. Allerdings bleibt ein relativ hoher Prozentsatz der Schmelze am Heizspiegel kleben, was sich auch durch Einsatz von teflonbeschichteten Heizspiegeln nicht verhindern ließ. Der Grund dafür liegt darin, dass die Haftfläche für die Schmelze am Heizspiegel größer ist als die am porösen EPP-Gefüge.

### Beispiel 2.2:

In diesem Versuch wurde wiederum ein EPP-Bauteil 30 gemäß Fig. 7 mit einem PP-Probekörper 31 gemäß Fig. 8a, 8b verschweißt. Die Erwärmung der Fügefläche erfolgte wiederum durch Heizelementschweißen. Es wurde nur das PP-Bauteil 31 erhitzt und anschließend mit einer Flächenlast von 14 N/cm² auf den EPP-Probekörper 30 gepresst. Dabei schmilzt die Fügefläche des EPP-Probekörpers auf. Der Heizspiegel wurde bei einer Temperatur von 250° C betrieben.

Die Auswertung ergab, dass die Festigkeit der Schweißnaht gut ist und ein Verschmelzen der beiden Fügeflächen ist auch unter dem Mikroskop zu beobachten. Allerdings dauerte bei diesem Versuch das Anschmelzen des PP-Bauteils 31 bei der gewählten Heizspiegeltemperatur relativ lange. Dies ist auf die hohe Wärmekapazität des Polypropylen zurückzuführen. Es sind daher gegebenenfalls höhere Heizspiegeltemperaturen zu wählen.

### Beispiel 3.2:

Auch bei diesem Versuch wurde ein EPP-Probekörper 30 gemäß Fig. 7 mit einem PP-Probekörper 31 gemäß den Fig. 8a, 8b verbunden. In diesem Fall erfolgte jedoch die Erwärmung der Fügeflächen durch Rotationsreibschweißen. Das PP-Bauteil wurde in eine Bohrmaschine eingespannt und mit einer Drehzahl von 710 1/sec. auf das EPP-Bauteil 30 gepresst. Die durch die Reibung entstehende Wärme brachte die Grenzflächen zum Aufund anschließend zum Verschmelzen. Die Flächenpressung betrug 14 N/cm².

Die Auswertung ergab eine gute Verschweißung und eine gute Festigkeit der Schweißverbindung.

### Beispiel 3.3:

In diesem Versuch wurde anstelle eines EPP-Probekörpers ein Bauteil aus einer mit EPP hinterschäumten TPO-Folie verwendet. Die Dichte des EPP betrug wiederum 65 g/l, die Fügefläche betrug 18 cm². Der Probekörper hatte die Maße des Probekörpers 30 gemäß Fig. 7. Dieses Bauteil aus mit EPP hinterschäumter TPO-Folie wurde mit einem Probekörper 31 aus kompaktem Polypropylen gemäß Fig. 8a, 8b verschweißt. Die Erwärmung erfolgte durch Rotationsreibschweißen.

Die Auswertung ergab eine gute Verschweißung der Bauteile und eine gute Festigkeit im Bereich der Schweißverbindung.

### Beispiel 4.1:

In diesem Versuch wurden zwei EPP-Probekörper 30 der vorbeschriebenen Art mit Quaderform gemäß Fig. 7 verschweißt. Für die Erwärmung der Fügefläche wurden jedoch in diesem Fall IR-Heizstrahler verwendet. Die beiden EPP-Probekörper 30 wurden erhitzt, bis ein Aufschmelzen der Fügeflächen zu beobachten war und dann aufeinander gepresst mit einer Flächenpressung von 4 N/cm².

Die Auswertung ergab, dass das Aufschmelzen der Fügeflächen sehr rasch erfolgte. Es ergab sich eine Schweißverbindung mit guter Festigkeit.

### Beispiel 4.2:

Bei diesem Versuch wurde wiederum ein EPP-Probekörper 30 gemäß Fig. 7 mit einem PP-Probekörper 31 gemäß Fig. 8a, 8b verschweißt. Für die Erwärmung der Fügefläche wurde jedoch wiederum ein Infrarotheizstrahler verwendet. Es wurde nur die Fügefläche des PP-Probekörpers 31 aufgeschmolzen und dieser wurde anschließend auf den EPP-Probekörper gepresst mit einer Flächenpressung von 14 N/cm².

Die Auswertung ergab eine befriedigende Verbindung der beiden Bauteile. Allerdings war die Aufheizzeit der Fügefläche des PP-Probekörpers aufgrund der Wärmekapazität relativ lang.

Die Ergebnisse der oben stehenden Versuche lassen sich wie folgt zusammenfassen. Bei der Verbindung von Bauteilen die beide aus EPP bestehen genügt eine Aufschmelzung der obersten Gefügefläche, um die Bauteile dauerhaft und fest zu verschweißen. Am besten eignet sich hier das Heizstrahlschweißen, da die gesamte Schmelze dort bleibt, wo sie sich bildet.

Das Heizelement bzw. Heizspiegelschweißen ist ebenfalls grundsätzlich geeignet. Allerdings ist hier etwas nachteilig, dass ein Teil der Schmelze am Heizspiegel festkleben kann.

Für Schweißverbindungen zwischen Bauteilen aus EPP und PP bieten sich besonders das Warmgasschweißen und das Rotationsreibschweißen an. Beim Warmgasschweißen muss der Warmluftstrom den PP-Probekörper erwärmen und an der gesamten Fügefläche anschmelzen. Aufgrund der Wärmekapazität des Polypropylen-Probekörpers reicht die Temperatur der Schmelze um die Fügefläche des EPP-Probekörpers anzuschmelzen. Beim EPP-Probekörper muss nur die oberste Schicht geschmolzen werden, um eine ausreichende Verschweißung zu erreichen.

Für die Verbindung von TPO (Thermoplastischen Polyolefinelastomeren), z. B. in Form von TPO-Folien mit Polypropylen-Bauteilen bietet sich aufgrund der hohen Temperaturbeständigkeit der TPO-Folien besonders das Rotationsreibschweißen an. Dabei entsteht die für die Verschweißung erforderliche Erwärmung nur an der Fügefläche.

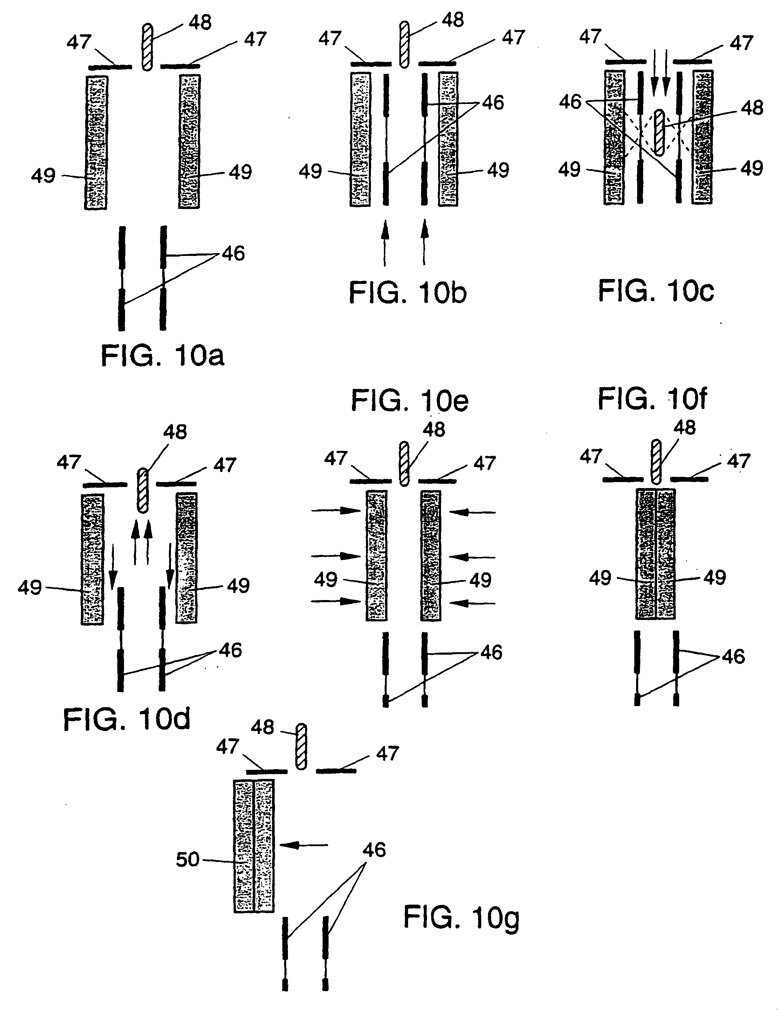

Nachfolgend wird das Funktionsprinzip eines IR-Schweißautomaten wie er bei einer Variante des erfindungsgemäßen Verfahrens bei der Verbindung von Bauteilen aus Partikelschaumstoffen verwendet werden kann, anhand von Fig. 9 sowie den Fig. 10a bis 10g erläutert.

Fig. 9 zeigt eine schematische Darstellung eines solchen IR-Schweißautomaten 40. Diese Vorrichtung umfasst einen Hydraulikzylinder 41 für den IR-Heizstrahler 48. Zwei Blenden 47 schirmen den IR-Strahler 48 in der Parkposition ab. Für das rechte Formnest 45 und für das linke Formnest 45 ist jeweils ein Hydraulikzylinder 42 bzw. 43 vorgesehen. Die zu verbindenden Bauteile aus Partikelschaumstoffen sind mit dem Bezugszeichen 49 gekennzeichnet. Es sind diverse Blenden 46 vorgesehen zur Abschirmung von Teilen der zu erwärmenden Fügeflächen der Bauteile 49, wobei diese Blenden 46 ebenfalls über einen Hydraulikzylinder 44 verfügen und somit beweglich sind.

Nachfolgend wird auf die Fig. 10a bis 10g Bezug genommen und anhand dieser der Fertigungsablauf erläutert. Fig. 10a zeigt einen ersten Schritt des Verfahrensablaufs. Die Bauteile 49 aus Partikelschaumstoff werden in das Formnest entweder manuell oder automatisch eingelegt. Durch Anlegen eines Vakuums können die Bauteile 49 im Formnest gehalten werden. Die IR-Heizstrahler 48 werden auf Betriebstemperatur gebracht und befinden sich in der Warteposition oberhalb der Formnester.

Wie man an Fig. 10b erkennen kann, die den nächsten Schritt im Fertigungsablauf zeigt, fahren dann die beiden Blenden 46 zwischen die EPP-Bauteile 49 in ihre Arbeitsposition. Die IR-Heizstrahler 48 befinden sich weiter in der Warteposition. Anschließend fahren die IR-Heizstrahler 48, wie man aus Fig. 10c erkennen kann in die Arbeitsposition zwischen die jeweiligen Blenden 46. Teilbereiche der Fügeflächen der Bauteile 49 können so erwärmt werden.

Fig. 10d zeigt den nächsten Schritt im Verfahrensablauf. Nach einer definierten Aufwärmzeit oder bei einer vorgegebenen Temperatur der Schmelze, die z. B. über ein Pyrometer zu ermitteln ist, fahren die IR-Heizstrahler 48 und die Blenden 46 möglichst gleichzeitig und möglichst rasch in die jeweilige Warteposition.

Die beiden EPP-Bauteile 49 werden dann über die jeweiligen Hydraulikzylinder 42, 43 in Pfeilrichtung zusammengefahren wie in Fig. 10e dargestellt ist. Fig. 10f zeigt den Zustand, wenn die jeweiligen Fügeflächen der Bauteile 49 aneinander liegen. Diese werden mit definiertem Druck zusammengepresst, so dass die angeschmolzenen Fügeflächen verschmelzen und es zu einer Verschweißung der Bauteile 49 kommt.

Nach dem Verschweißen der Bauteile 49 wird das Vakuum am rechten Formnest nachgelassen und das Verbundbauteil 50 wird mittels Druckluft vom rechten Formnest gelöst. In Fig. 10g ist dies schematisch vereinfacht dargestellt. Die Formnester fahren in ihre Ausgangsstellung zurück. Mittels Druckluft kann dann das Verbundbauteil 50 ausgestoßen und manuell oder automatisch entnommen werden. Die in den Fig. 10a bis 10g dargestellte senkrechte Anordnung der zu verbindenden Bauteile 49 und der übrigen Komponenten ist empfehlenswert, da man so ein gleichmäßiges Aufschmelzen der Fügeflächen erreicht.

## Patentansprüche

1. Verfahren zum Verbinden von Bauteilen (11, 12) aus Partikelschaumstoffen untereinander oder mit anderen Bauteilen aus anderen Werkstoffen, wobei man die Fügefläche (10, 13) wenigstens des Partikelschaumstoff-Bauteils (11, 12) teilweise erwärmt, derart, dass sich das Bauteil (11, 12) an seiner Oberfläche in einer Raumrichtung senkrecht zur Fügefläche (10) ausdehnt, und anschließend die Fügeflächen (10, 13) der zu verbindenden Bauteile (11, 12) gegeneinander presst und so die Bauteile (11, 12) im Bereich der Fügeflächen (10, 13) miteinander verschweißt, **dadurch gekennzeichnet, dass** man während der Erwärmung die nicht zu erwärmenden Teilbereiche der Fügeflächen (10, 13) durch Blenden (19) abschirmt.

2. Verfahren zum Verbinden von Bauteilen nach Anspruch 1, **dadurch gekennzeichnet, dass** die Partikelschaumstoffe eine geschlossenzellige glatte Oberfläche (14) aufweisen.

3. Verfahren zum Verbinden von Bauteilen nach Anspruch 1 oder 2, **dadurch gekennzeichnet, dass** der Partikelschaumstoff ein Polyolefin ist.

4. Verfahren zum Verbinden von Bauteilen nach Anspruch 1 oder 2, **dadurch gekennzeichnet, dass** der Partikelschaumstoff ein thermoplastisches Polyolefinelastomer oder ein Polypropylen enthält.

5. Verfahren zum Verbinden von Bauteilen nach einem der Ansprüche 1 bis 4, **dadurch gekennzeichnet, dass** wenigstens eines der Bauteile (11, 12), vorzugsweise beide zu verbindenden Bauteile (11, 12), aus expandiertem Polypropylen (EPP) bestehen.

6. Verfahren zum Verbinden von Bauteilen nach einem der Ansprüche 1 bis 5, **dadurch gekennzeichnet, dass** das wenigstens teilweise Erwärmen einer der Fügeflächen (10) durch Warmgas und/oder ein Heizelement und/oder Rotationsreibung und/oder Vibrationen und/oder Heizstrahler vorgenommen wird.

7. Verfahren zum Verbinden von Bauteilen nach einem der Ansprüche 1 bis 6, **dadurch gekennzeichnet, dass** der zu erwärmende Teil der wenigstens einen Fügefläche (10) auf eine solche Temperatur erwärmt wird, dass ein Aufschmelzen oder Anschmelzen der Fügefläche sichtbar ist.

8. Verfahren zum Verbinden von Bauteilen nach einem der Ansprüche 1 bis 7, **dadurch gekennzeichnet, dass** die Fügeflächen (10, 13) der zu verbindenden Bauteile (11, 12) mit einer Flächenlast von etwa 1 N/cm² bis 20 N/cm², vorzugsweise mit einer Flächenlast von etwa 4 N/cm² bis etwa 14 N/cm², gegeneinander gepresst werden.

9. Verfahren zum Verbinden von Bauteilen nach einem der Ansprüche 1 bis 8, **dadurch gekennzeichnet, dass** man die verbundenen Bauteile (11, 12) nach dem Gegeneinanderpressen der Fügeflächen (10, 13) unter Druck abkühlen lässt.

10. Verfahren zum Verbinden von Bauteilen nach einem der Ansprüche 1 bis 9, **dadurch gekennzeichnet, dass** man die wenigstens teilweise zu erwärmende Fügefläche (10, 13) mittels Infrarotheizstrahlem (20) erwärmt.

## Claims

1. Method for connecting structural components (11, 12) made from particle-foam materials to one another or to other structural components made from other materials, wherein the joint surface (10, 13) at least of the particle-foam structural component (11, 12) is partially heated, in such a manner that the structural component (11, 12) expands at its surface in a spatial direction perpendicular to the joint surface (10), and that the joint surfaces (10, 13) of the structural components (11, 12) to be connected are then pressed together so that the structural components (11, 12) are welded to one another in the region of the joint surfaces (10, 13), **characterised in that**, during heating, the regions of the joint surfaces (10, 13), which are not to be heated, are screened by means of masks (19).

2. Method for connecting structural components according to claim 1, **characterised in that** the particle-foam materials provide a closed-pore, smooth surface (14).

3. Method for connecting structural components according to claim 1 or 2, **characterised in that** the particle-foam material is a polyolefin.

4. Method for connecting structural components according to claim 1 or 2, **characterised in that** the particle-foam material contains a thermoplastic polyolefin elastomer or a polypropylene.

5. Method for connecting structural components according to any one of claims 1 to 4, **characterised in that** at least one of the structural components (11, 12), preferably both of the structural components (11, 12), to be connected, consists of expanded polypropylene (EPP).

6. Method for connecting structural components according to any one of claims 1 to 5, **characterised in that** at least partial heating of one of the joint surfaces (10) is carried out with heated gas and/or a heating element and/or rotational friction and/or vibrations and/or heating radiators.

7. Method for connecting structural components according to any one of claims 1 to 6, **characterised in that** the part of the at least one joint surface (10), which is to be heated, is heated to such a temperature that a melting or a softening of the joint surface is visible.

8. Method for connecting structural components according to any one of claims 1 to 7, **characterised in that** the joint surfaces (10, 13) of the structural components (11, 12) to be connected are pressed together with a surface loading of approximately 1 N/cm² to 20 N/cm², preferably with a surface loading of approximately 4 N/cm² to approximately 14 N/cm².

9. Method for connecting structural components according to any one of claims 1 to 8, **characterised in that**, after the pressing together of the joint surfaces (10, 13), the connected structural components (11, 12) are allowed to cool under pressure.

10. Method for connecting structural components according to any one of claims 1 to 9, **characterised in that** the joint surface (10, 13), which is to be heated at least in parts, is heated by means of infrared heating radiators (20).

## Revendications

1. Procédé pour relier des composants (11, 12) en matériaux particulaires alvéolaires entre eux ou avec d'autres composants en d'autres matériaux, dans lequel la surface de jonction (10, 13) appartenant au moins au composant (11, 12) en un matériau particulaire alvéolaire est partiellement chauffée de façon telle que ledit composant (11, 12) accuse une expansion à sa surface, dans une direction spatiale perpendiculaire à la surface de jonction (10), après quoi les surfaces de jonction (10, 13) des composants (11, 12) à solidariser sont pressées l'une contre l'autre et lesdits composants (11, 12) sont ainsi solidarisés par soudage dans la région des surfaces de jonction (10, 13), **caractérisé par le fait que**, durant le chauffage, les régions partielles des surfaces de jonction (10, 13), ne devant pas être chauffées, sont protégées par des caches (19).

2. Procédé pour relier des composants, selon la revendication 1, **caractérisé par le fait que** les matériaux particulaires alvéolaires présentent une surface lisse (14) à pores fermés.

3. Procédé pour relier des composants, selon la revendication 1 ou 2, **caractérisé par le fait que** le matériau particulaire alvéolaire est une polyoléfine.

4. Procédé pour relier des composants, selon la revendication 1 ou 2, **caractérisé par le fait que** le matériau particulaire alvéolaire renferme un élastomère de polyoléfine thermoplastique ou un polypropylène.

5. Procédé pour relier des composants, selon l'une des revendications 1 à 4, **caractérisé par le fait qu'**au moins l'un des composants (11, 12), de préférence les deux composants (11, 12) à solidariser, consiste(nt) en du polypropylène expansé (EPP).

6. Procédé pour relier des composants, selon l'une des revendications 1 à 5, **caractérisé par le fait que** le chauffage au moins partiel de l'une (10) des surfaces de jonction est effectué par un gaz chaud et/ou par un élément chauffant et/ou par frottement rotatif et/ou par des vibrations et/ou par des diffuseurs chauffants.

7. Procédé pour relier des composants, selon l'une des revendications 1 à 6, **caractérisé par le fait que** la partie devant être chauffée de l'au moins une surface de jonction (10) est chauffée jusqu'à une température propre à rendre visible la fusion en surface ou l'amorce de fusion de ladite surface de jonction.

8. Procédé pour relier des composants, selon l'une des revendications 1 à 7, **caractérisé par le fait que** les surfaces de jonction (10, 13) des composants (11, 12) à solidariser sont pressées l'une contre l'autre sous une charge superficielle d'environ 1 N/cm² à 20 N/cm², de préférence sous une charge superficielle d'environ 4 N/cm² à environ 14 N/cm².

9. Procédé pour relier des composants, selon l'une des revendications 1 à 8, **caractérisé par le fait que** les composants reliés (11, 12) sont mis à refroidir sous pression après que les surfaces de jonction (11, 13) ont été pressées l'une contre l'autre.

10. Procédé pour relier des composants, selon l'une des revendications 1 à 9, **caractérisé par le fait que** la surface de jonction (10, 13), devant être chauffée au moins partiellement, est chauffée au moyen de diffuseurs (20) de chauffage par infrarouges.
